# FASCICULE DE BREVET EUROPEEN

(11) **EP 1 092 586 B1**
(45) Date de publication et mention de la délivrance du brevet: **29.06.2005**
(21) Numéro de dépôt: 00490039.5
(22) Date de dépôt: 04.10.2000
(51) Int. Cl.: B60N 2/58, B60N 2/60

(54) **Housse, notamment pour sièges de véhicules automobiles**
Schonbezug für Kraftfahrzeugsitze
Cover for motor vehicle seats

(30) Priorité: 12.10.1999 FR 9912931
(43) Date de publication de la demande: 18.04.2001
(73) Titulaire: HOLDING SWEETCO, Société Anonyme, 59115 Leers (FR)
(72) Inventeur: Room, Thierry, 59300 Valenciennes (FR); Defour, Evelyne, 59590 Raismes (FR)
(74) Mandataire: Duthoit, Michel

(56) Documents cités:
- EP-A- 0 727 333
- EP-A- 0 926 014
- US-A- 5 874 030
- US-A- 5 893 579
- PATENT ABSTRACTS OF JAPAN vol. 1999, no. 02, 26 février 1999 (1999-02-26) & JP 10 309219 A (T S TEC KK), 24 novembre 1998 (1998-11-24)
- PATENT ABSTRACTS OF JAPAN vol. 1999, no. 02, 26 février 1999 (1999-02-26) & JP 10 309218 A (T S TEC KK), 24 novembre 1998 (1998-11-24)
- PATENT ABSTRACTS OF JAPAN vol. 1999, no. 02, 26 février 1999 (1999-02-26) & JP 10 309221 A (T S TEC KK), 24 novembre 1998 (1998-11-24)

## Description

L'invention concerne une housse, notamment housse de deuxième monte, pour sièges de véhicules automobiles.

Toutefois, bien que plus particulièrement prévue pour de telles applications, elle pourra être employée dans tous les secteurs de l'activité économique dans lesquels on est amené à utiliser des housses. Elle pourra, par exemple, bien naturellement s'appliquer dans le cas du recouvrement des sièges, dès l'origine, c'est-à-dire en première monte.

Actuellement, dans le domaine des sièges de véhicules automobiles, il est connu de rééquiper ceux-ci de housse dites « de deuxième monte », c'est-à-dire, destinées à recouvrir les housses d'origine. Elles permettent d'éviter leur usure et/ou d'adapter l'aspect esthétique des sièges au goût des utilisateurs du véhicule.

Il est notamment connu l'utilisation d'une housse constituée au moins d'une enveloppe comprenant au moins deux parties reliées, directement ou non, par une couture fermant au moins localement ladite enveloppe.

Parallèlement, il est connu de munir les sièges de véhicules automobiles de dispositifs à sacs ou coussins gonflables, plus communément appelés « airbag ».

Afin que les housses de deuxième monte restent compatibles avec ce nouvel équipement, différentes solutions ont déjà été proposées. Elles sont par exemple équipées d'une ou plusieurs languettes, localement fixées à la housse, la ou lesdites languettes étant destinées à se déchirer ou à se séparer lors de l'expansion du coussin gonflable pour permettre son passage.

Toutefois, ces solutions ne se sont pas révélées satisfaisantes, en particulier en raison de leur manque de fiabilité.

En effet, soit elles ne sont pas assez résistantes et la housse s'ouvre lors de ses manipulations normales, c'est-à-dire, lors de son installation sur le siège et/ou en cas de frictions dues à la présence du passager, soit elles sont trop résistantes, ce qui retarde l'expansion du coussin gonflable, diminuant ainsi son efficacité et pouvant même le rendre dangereux.

Il est également connu du document US 5 893 579 une housse constituée d'une enveloppe présentant une zone à double couture, comprenant au moins deux parties reliées, directement ou non, par une couture fermant au moins, d'une part, localement ladite enveloppe et définissant au moins, d'autre part, des moyens d'ouverture de ladite enveloppe.

Cela étant, les différentes solutions déjà développées sont peu esthétiques et/ou de coûts élevés.

Le but de la présente invention est de proposer une housse qui pallie les inconvénients précités en étant capables de s'ouvrir localement de façon contrôlée, avec un niveau de fiabilité satisfaisant.

Un autre but de la présente invention est de proposer une housse qui puisse s'ouvrir localement de façon contrôlée tout en conservant un aspect esthétique soigné.

Un autre but de la présente invention est de proposer une housse qui puisse s'ouvrir localement de façon contrôlée tout en conservant un coût de revient réduit.

D'autres buts et avantages de l'invention apparaîtront au cours de la description qui va suivre qui n'est donnée qu'à titre indicatif et qui n'a pas pour but de la limiter.

L'invention concerne une housse constituée au moins d'une enveloppe comprenant au moins deux parties reliées, directement ou non, par une couture fermant au moins, d'une part, localement ladite enveloppe, et définissant au moins, d'autre part, des moyens d'ouverture de ladite enveloppe, caractérisée par le fait que ladite couture est formée en points noués, constituée d'un fil épais, assurant la résistance de la couture, et d'un fil fin, jouant le rôle d'éléments d'affaiblissement, successivement noués l'un à l'autre, de sorte que ladite couture puisse céder sous l'action d'une contrainte prédéterminée tout en assurant sa résistance pour les contraintes plus faibles, de manière à permettre l'apparition ou non, en fonction des contraintes appliquées, d'une fente entre lesdites deux parties.

L'invention sera mieux comprise à la lecture de la description suivantes, accompagnée des dessins en annexe qui en font partie intégrante et parmi lesquels :
- La figure 1 illustre, en perspective, un exemple de housse conforme à l'invention, équipant un siège de véhicule automobile,
- les figures 2a et 2b illustrent, selon deux variantes de réalisation, la partie repérée 2 à la figure 1 précédente.

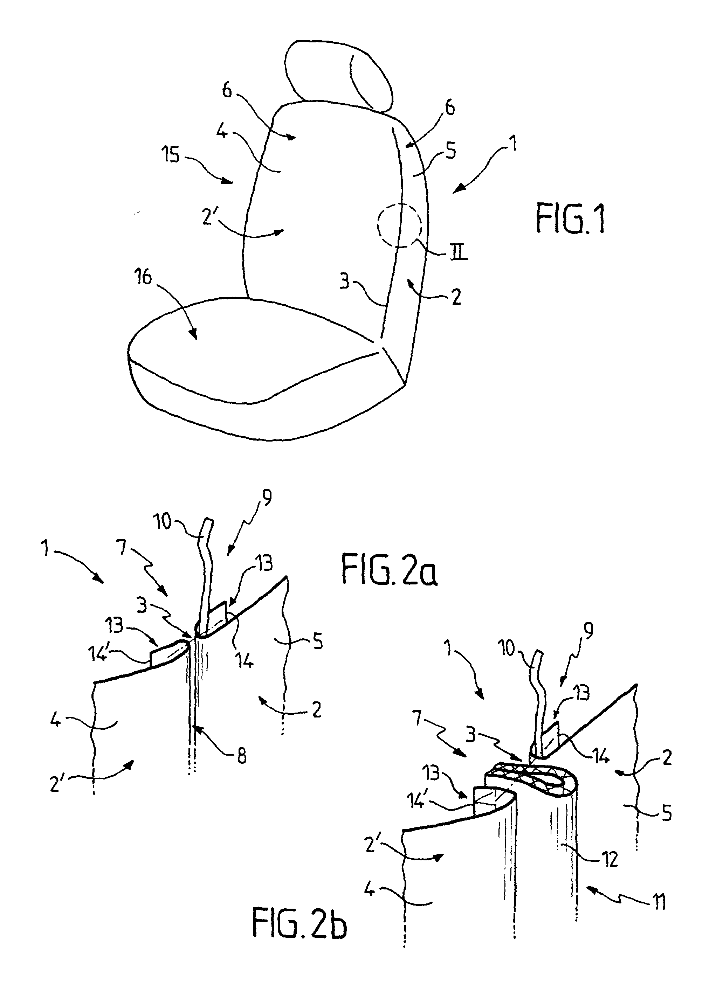

Comme illustrée à la figure 1, la housse conforme à l'invention est constituée d'au moins une enveloppe 1 comprenant au moins deux parties 2, 2' reliées, directement ou non, par une couture 3 fermant au moins localement ladite enveloppe.

Il s'agit d'une housse présentant, par exemple, une forme sensiblement parallélépipédique. Lesdites deux parties 2, 2' sont constituées, notamment, de deux pièces de tissus distinctes 4, 5 définissant chacune comme représenté, un côté 6 de l'eneloppe de ladite housse.

Lesdites deux pièces 4, 5 pourront encore définir un seul côté de la housse, la couture 3 étant alors prévue, par exemple, sensiblement au milieu de celui-ci.

Selon l'invention, afin de permettre le passage à travers ladite enveloppe d'objets tels que, notamment, des sacs ou coussins gonflables, celle-ci est munie de moyens d'ouverture 7 permettant de laisser ladite couture 3 céder sous l'action d'une contrainte prédéterminée tout en assurant sa résistance pour les contraintes plus faibles, de manière à permettre l'apparition ou non, en fonction des contraintes appliquées, d'une fente 8 entre lesdites deux parties.

En agissant ainsi sur la couture 3, plutôt que sur un élément rapporté, on peut mieux contrôler l'ouverture de l'enveloppe.

Dans le cas d'un siège équipé d'un coussin gonflable, lesdits moyens d'ouverture agissent, par exemple, de façon à empêcher que la couture 3 cède tant que la housse ne subit que des déformations normales telles que, des étirements lors de son installation. Par contre, en cas d'expansion du coussin gonflable, ils permettent l'apparition de ladite fente 8 par rupture de la couture.

Lesdits moyens d'ouverture 7 sont définis, par exemple, au moins par ladite couture 3 elle-même formée à cette fin en points noués, pour ajuster sa résistance.

En jouant sur le type de couture choisie, on dispose ainsi d'une solution qui va permettre de conserver un aspect extérieur identique pour la housse.

Par couture en points noués, on entend, de façon connue de l'Homme de l'Art, une couture constituée d'un fil épais et d'un fil fin, successivement noués l'un à l'autre.

Le fil épais assure la résistance de la couture, tandis que le fil fin joue le rôle d'éléments d'affaiblissement.

La résistance de la couture est adaptée, notamment, par le nombre de points au centimètre utilisés. Plus le nombre de points est grand, plus la résistance de la couture est élevée.

A titre d'exemple, pour permettre l'expansion d'un coussin gonflable, on pourra employer deux à trois points par centimètre. Grâce à ladite couture 3, l'ouverture de la fente 8 sera progressive.

Lesdits moyens d'ouverture 7 pourront aussi comprendre, notamment, un élément de renfort 9 distinct, situé parallèlement à ladite couture 3, sur une partie au moins de sa longueur. Ledit élément de renfort 9 et lesdites parties 2, 2' de l'enveloppe sont cousus par ladite couture 3.

Ledit élément de renfort 9 est constitué, notamment, d'une ganse 10. Cette dernière est formée, par exemple, d'une matière inextensible, tissée.

Elle contribue à empêcher la déformation de la housse et permet de contrôler la casse de la couture, plus particulièrement de son fil fin, notamment lors de la mise en place.

Ladite housse pourra encore comprendre, éventuellement un élément décoratif 11, prévu longitudinalement entre lesdites deux parties 2, 2'. Ledit élément décoratif 11 est cousu au moins avec lesdites deux parties 2, 2' par ladite couture 3.

Ledit élément décoratif 11 est constitué, par exemple, d'un jonc 12. Ce dernier est formé, notamment, d'une bande de matériau synthétique repliée sur elle-même.

Comme illustrée, ladite couture 3 est prévue, éventuellement, au niveau d'un revers 13 situé au voisinage d'un bord 14, 14' de chacune desdites deux parties 2, 2'.

Selon ce mode de réalisation, ladite ganse 10 pourra être placée à l'intérieur d'undit revers 13.

Cela étant, ladite housse 1 pourra être prévue amovible de manière à constituer, notamment, une housse de deuxième monte pour sièges de véhicules automobiles.

Comme déjà évoqué, elle pourra ainsi équiper par exemple, des sièges munis d'un dispositif à sacs ou coussins gonflables, notamment situé au niveau de leur dossier.

Pour cela, ladite housse 1 est constituée, notamment, d'une première zone 15, apte à recouvrir le dossier du siège, et/ou d'un seconde zone 16 apte à recouvrir son assise, lesdites premières et secondes zones 15, 16 étant éventuellement distinctes, adaptées à la taille du siège à laquelle elles sont destinées.

Ladite couture 3 est située, par exemple, au niveau dudit dispositif à sacs ou coussins gonflables, c'est-à-dire, notamment, au niveau d'un des côtés latéraux 6 du dossier 15 de la housse.

Naturellement, d'autres modes de mise en oeuvre, à la portée de l'Homme de l'Art, auraient pu être envisagés sans pour autant sortir du cadre de l'invention.

## Revendications

1. Housse constituée au moins d'une enveloppe (1) comprenant au moins deux parties (2, 2') reliées, directement ou non, par une couture (3) fermant au moins, d'une part, localement ladite enveloppe, et définissant au moins, d'autre part, des moyens d'ouverture (7) de ladite enveloppe, **caractérisée par le fait que** ladite couture (3) est formée en points noués, constituée d'un fil épais, assurant la résistance de la couture, et d'un fil fin, jouant le rôle d'éléments d'affaiblissement, successivement noués l'un à l'autre, de sorte que ladite couture (3) puisse céder sous l'action d'une contrainte prédéterminée tout en assurant sa résistance pour les contraintes plus faibles, de manière à permettre l'apparition ou non, en fonction des contraintes appliquées, d'une fente (8) entre lesdites deux parties (2, 2').

2. Housse selon la revendication 1, dans laquelle lesdits moyens d'ouverture (7) comprennent un élément de renfort (9) distinct, situé parallèlement à ladite couture (3) sur une partie au moins de sa longueur, ledit élément de renfort (9) et lesdites deux parties (2, 2') de l'enveloppe étant cousus par ladite couture (3).

3. Housse selon la revendication 2, dans laquelle ledit élément de renfort (9) est constitué d'une ganse (10).

4. Housse selon l'une quelconque des revendications précédentes, comprenant un élément décoratif (11) prévu longitudinalement entre lesdites deux parties (2, 2'), cousu au moins avec lesdites deux parties (2, 2') par ladite couture (3).

5. Housse selon la revendication 4, dans laquelle ledit élément décoratif (11) est constitué d'un jonc (12).

6. Housse selon l'une quelconque des revendications précédentes, dans laquelle ladite couture (3) est prévue au niveau d'un revers (13) situé au voisinage d'un bord (14, 14'), de chacune desdites deux parties (2,2').

7. Housse selon la revendication 1, prévue amovible, de manière à pouvoir constituer, notamment, une housse de deuxième monte pour sièges de véhicules automobiles.

8. Housse selon la revendication 7, constituée d'une première zone (15), apte à recouvrir le dossier d'un siège, et/ou d'une seconde zone (16), apte à recouvrir l'assise dudit siège, lesdites première et seconde zones (15, 16) étant éventuellement distinctes.

9. Housse selon la revendication 8, prévue adaptée à la taille du siège.

## Patentansprüche

1. Überzug, bestehend zumindest aus einem Bezug (1), der zumindest zwei Teile (2, 2') umfaßt, die direkt oder indirekt durch eine Naht (3) verbunden sind, die, einerseits, den besagten Bezug zumindest örtlich schließt, und die, andererseits, zumindest Öffnungsmittel (7) für den besagten Bezug bildet, **dadurch gekennzeichnet, daß** die besagte Naht (3) durch zusammengeknüpfte Punkte gebildet ist, aus einem dicken Faden, der den Widerstand der Naht sichert, und aus einem dünnen Faden, der die Rolle von Erschwächungselementen spielt, besteht, die aufeinanderfolgend zusammengeknüpft sind, derart, daß die besagte Naht (3) unter der Wirkung einer vorbestimmten Beanspruchung nachlassen kann, während ihr Widerstand bei schwächeren Beanspruchungen gesichert ist, derart, um in Abhängigkeit von den angewendeten Beanspruchungen das Aufkommen einer Spalte (8) zwischen den besagten beiden Teilen (2, 2') zu erlauben oder nicht zu erlauben.

2. Überzug nach Anspruch 1, bei dem die besagten Öffnungsmittel (7) ein separates Verstärkungselement (9) umfassen, das parallel zu der besagten Naht (3) auf einem Teil zumindest ihrer Länge befindlich ist, wobei das besagte Verstärkungselement (9) und die besagten beide Teile (2, 2') des Bezugs durch die besagte Naht (3) genäht seien.

3. Überzug nach Anspruch 2, bei dem das besagte Verstärkungselement (9) durch einen Bullcord (10) gebildet ist.

4. Überzug nach irgendeinem der vorgehenden Ansprüche, umfassend ein Verzierungselement (11), vorgesehen der Länge nach zwischen den besagten beiden Teilen (2, 2'), das durch die besagte Naht (3) zumindest mit den besagten zwei Teilen (2, 2') genäht ist.

5. Überzug nach Anspruch 4, bei dem das besagte Verzierungselement (11) durch einen Draht (12) gebildet ist.

6. Überzug nach irgendeinem der vorgehenden Ansprüche, bei dem die besagte Naht (3) im Bereich eines rückseitigen Aufschlags (13) vorgesehen ist, der in der Nähe des Randes (14, 14') von jedem der besagten beiden Teile (2, 2') befindlich ist.

7. Überzug nach Anspruch 1, der abnehmbar vorgesehen ist, derart, um insbesondere einen Überzug zur zweiten Deckung für Fahrersitze von Kraftfahrzeugen bilden zu können.

8. Überzug nach Anspruch 7, bestehend aus einem ersten Bereich (15), der geeignet ist, die Rücklehne eines Sitzes zu bedecken, und/oder aus einem zweiten Bereich (16), der geeignet ist, den Sitz des besagten Fahrersitzes zu bedecken, wobei die besagten ersten und zweiten Bereiche (15, 16) eventuell unterschiedlich sind.

9. Überzug nach Anspruch 8, der der Größe des Sitzes angepaßt vorgesehen ist.

## Claims

1. A cover composed of at least one envelope (1) comprising at least two sections (2, 2') connected, directly or not, by a seam (3) closing at least, on the one hand, locally said envelope, and delineating at least, on the other hand, means (7) for opening said envelope, **characterised in that** said seam (3) is formed of lock stitches, composed of a thick thread, conferring resistance to said seam, and of a thin thread, acting as weakening elements, successively locked to one another, so that said seam (3) may yield under the action of a preset load while ensuring resistance for smaller loads, to enable the occurrence or not, relative to the loads applied, of a slot (8) between said both sections (2, 2').

2. A cover according to claim 1, wherein said opening means (7) comprise a distinct reinforcing element (9), situated parallel to said seam (3) over a portion at least of its length, said reinforcing element (9) and said both sections (2, 2') of the envelope being sewn by said seam (3).

3. A cover according to claim 2, wherein said reinforcing element (9) is composed of a braid (10).

4. A cover according to any of the previous claims, comprising a decorative element (11) arranged longitudinally between said both sections (2, 2'), sewn at least between said both sections (2, 2') by said seam (3).

5. A cover according to claim 4, wherein said reinforcing element (11) is composed of a snap ring (12).

6. A cover according to any of the previous claims, wherein said seam (3) is provided at a lapel (13) situated in the vicinity of an edge (14, 14'), of each of said both sections (2, 2').

7. A cover according to claim 1, provided releasable, so as to form, in particular, a second layer cover for automobile vehicle seats.

8. , A cover according to claim 7, formed of a first zone (15), capable of covering the back of a seat, and/or of a second zone (16), capable of covering the base of said seat, whereas said first and second zones (15, 16) may be distinct.

9. A cover according to claim 8, provided as appropriate to the size of the seat.
